# EUROPEAN PATENT SPECIFICATION

(11) **EP 3 864 063 B1**
(45) Date of publication and mention of the grant of the patent: **29.11.2023**
(21) Application number: 19779002.5
(22) Date of filing: 30.09.2019
(51) Int. Cl.: C08G 18/58, C08G 18/76, C08G 18/79, C08G 18/16, C08G 18/22, C08G 18/28, C08G 18/42

(54) **A PROCESS FOR PREPARING A PREPREG BINDER COMPOSITION, A PREPREG AND USE THEREOF**
VERFAHREN ZUR HERSTELLUNG EINER PREPREGBINDEMITTELZUSAMMENSETZUNG, EIN PREPREG UND DESSEN VERWENDUNG
PROCÉDÉ DE PRÉPARATION D'UNE COMPOSITION DE LIANT DE PRÉIMPRÉGNÉ, PRÉIMPRÉGNÉ ET SON UTILISATION

(30) Priority: 09.10.2018 EP 18199253
(43) Date of publication of application: 18.08.2021
(73) Proprietor: BASF SE, 67056 Ludwigshafen am Rhein (DE)
(72) Inventor: LIESE, Julia, 49448 Lemfoerde (DE); BOKERN, Stefan, 49448 Lemfoerde (DE); STOLL, Ragnar, 49448 Lemfoerde (DE); HABICHT, Annika, 49448 Lemfoerde (DE); SPREEN, Sylvia, 49448 Lemfoerde (DE)
(74) Representative: BASF IP Association
(86) International application number: PCT/EP2019/076361
(87) International publication number: WO 2020/074293

(56) References cited:
- WO-A1-2015/078740
- WO-A1-2016/188774
- WO-A1-2016/188805
- US-A1- 2010 249 310

## Description

The present invention relates to a process for preparing a prepreg binder composition and a prepreg binder composition obtained therefrom. The invention further also relates to a process for preparing a prepreg comprising the prepreg binder composition, a prepreg and a polyurethane obtained therefrom and use of the polyurethane for making shaped articles.

### Background of the invention

Prepregs or pre-impregnated materials are long known in the state of the art. One such prepreg material is disclosed in US 2012/0003891 A1, which comprises at least one fibrous support and at least one reactive powdery polyurethane (also referred as PU) composition. The reactive composition consists essentially of, as binder, a polymer which has functional groups reactive towards isocyanate and, as curing agent, aliphatic isocyanate which has been internally blocked and/or has been blocked with blocking agents. Optionally, there may be also present additional catalysts such as organometallic catalysts, which are well known in the PU chemistry. The curing time reported here is in the range of 4 to 60min at temperatures of 180 °C.

WO 2015/078740 A1 discloses fast curing compositions with long open times for making prepregs, the compositions comprising a polyol, a polyisocyanate, an epoxy compound and a catalyst system containing a metal salt and a diurethane compound.

US pat. No. 8,674,050 B2 describes reactive isocyanate compositions which can be cured without an isocyanate-reactive group. The reactive composition essentially comprises a catalyst of a quaternary ammonium salt and/or phosphonium salt with halogens or organic or inorganic anions or hydroxide as a counterion and an epoxy group containing compound as a co-catalyst. Low temperature curing (between 80°C to 150°C) within 5 to 30minutes has been reported.

Also known are polyurethane systems having a long open time and a fast curing reaction. These systems are, for example, used for vacuum infusion. These resins are disclosed, for example, in EP 2205654 A1, WO 2010121898 A1, WO 2013098034 A1 and WO 2013143841 A1.

Disadvantage of the known prepreg material is a still too short storage time and/or a too slow curing time. It is desired to provide a prepreg material which can be stored for hours or even days or weeks without curing and, when curing is initiated, cures within only a few minutes or even seconds to allow a fast and efficient production of the final parts. Further, aliphatic isocyanates are expensive and often hazardous due to their low vapor pressure, therefore the possibility to apply aromatic isocyanates is desired.

Thus, it was an objective of the presently claimed invention to provide a process for preparing a prepreg binder composition, hereinafter interchangeably referred as B-stage material, which is storage stable with long open time and quick curing at elevated temperature. Additionally, it is also desired that the B-stage material has acceptable physical properties such as but not limited to viscosity, adhesiveness and wettability, thereby rendering it employable for obtaining a prepreg. It is further desirable that upon curing the prepreg binder composition, the resulting polyurethane shows acceptable mechanical properties, such as but not limited to, tensile strength, elasticity modulus, flexural properties and elongation at break.

### Summary of the invention

Surprisingly, it has been found that the above objective could be achieved by using an isocyanate prepolymer having an isocyanate content in the range of ≥ 8 wt.-% to ≤ 22 wt.-% and at least one catalyst which is a mixture obtainable by introducing an alkali metal or alkaline earth metal salt into a compound R-NH-CO-XR', wherein X is selected from the group consisting of NH, O or S, or a mixture obtainable by introducing an alkali metal or alkaline earth metal salt into a compound having -CO-NH-CO- group.

Accordingly, in one aspect, the present invention is directed to a process for preparing a prepreg binder composition comprising the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g, and
   (PI) at least one polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA) with the isocyanate prepolymer of step (A) to obtain a prepreg binder composition having a viscosity in the range of ≥ 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

In another aspect, the present invention is directed to a prepreg binder composition obtained according to the above process and having a viscosity in the range of ≥ 10 Pa.s to ≤ 1000 Pa.s.

In yet another aspect, the present invention is directed to a process for preparing a prepreg, comprising the steps of:
(A') preparing a prepreg binder composition as described hereinabove, and
(B') impregnating at least one fibrous support (FS) with the prepreg binder composition obtained in step (A') to obtain a prepreg.

In still another aspect, the present invention is directed to a prepreg obtained by the above process.

In yet another aspect, the present invention is directed to a process for preparing a polyurethane, comprising the step of:
(S1) heating the prepreg described hereinabove or as obtained according to the above process preferably at a temperature > 80°C to obtain a polyurethane.

Further disclosed is a polyurethane obtained by the above process.

Also disclosed is a use of the polyurethane as described hereinabove or as obtained according to the above process, for making a shaped article.

### Detailed description of the invention

Before the present compositions and formulations of the invention are described, it is to be understood that this invention is not limited to particular compositions and formulations described, since such compositions and formulation may, of course, vary. It is also to be understood that the terminology used herein is not intended to be limiting, since the scope of the present invention will be limited only by the appended claims.

If hereinafter a group is defined to comprise at least a certain number of embodiments, this is meant to also encompass a group which preferably consists of these embodiments only. Furthermore, the terms "first", "second", "third" or "(a)", "(b)", "(c)", "(d)" etc. and the like in the description and in the claims, are used for distinguishing between similar elements.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

An aspect of the present invention describes a process for preparing a prepreg binder composition comprising the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g, and
   (PI) at least one polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA) with the isocyanate prepolymer of step (A) to obtain a prepreg binder composition having a viscosity in the range of ≥ 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

The prepreg binder composition of the present invention is a liquid pasty material having viscosity in the range of ≥ 10 Pa.s to ≤ 1000 Pa.s at room temperature and preferably ≥ 1 Pa.s to ≤ 1000 Pa.s at 40°C. By the term "room temperature", it is referred to a temperature of 25°C. For the purpose of the present invention, the viscosity of the prepreg binder composition is determined using a Brookfield DV2TRV or DV2THB viscometer equipped with disposable spindles SC4-27 after 24 hours storage at room temperature. For the respective viscosity ranges, two different spindles were used: RV for 0.125-2500 Pa.s and HB for 1-20000 Pa.s. The viscosity was determined 24 hours after production and storage in a closed vessel at room temperature.

The prepreg binder composition of the present invention is maintained as a liquid pasty material with the abovementioned viscosity so that it preferably remains unreacted with prepreg binder components until at high temperatures, when the catalyst is activated. For the purpose of the present invention, "high temperature" here refers to curing temperature, preferably > 80°C. Also, the term "prepreg binder components" refers to the isocyanate prepolymer, the at least one epoxy compound (EP) and the at least one catalyst (CA), as described hereinabove and hereinbelow. The final curing temperature of the prepreg binder composition according to the invention might vary depending on the composition of the prepreg binder composition and especially on the specific catalyst (CA) as well as the epoxide compound (EP) and isocyanate prepolymer employed. The final curing preferably occurs at temperatures in the range of ≥ 80°C to ≤ 250°C, more preferably ≥ 90°C to ≤ 200°C, most preferably ≥ 100°C to ≤ 200°C. The most suitable temperature for a specific prepreg binder composition can be determined in orientating experiments by varying the curing temperature.

The isocyanate prepolymer obtained in the prepolymer step has an isocyanate content in the range of ≥ 8 wt.-% to ≤ 22 wt.-%. The isocyanate content may also be referred to as NCO content or %NCO content, henceforth. It is well known to the person skilled in the art to measure and determine the NCO content and therefore, the present invention is not limited by the choice or selection of such techniques. For instance, DIN EN ISO 11909 or ASTM D 2572-70 (dibutylamine) can be used to determine the NCO content.

Preferably, the NCO content of the isocyanate prepolymer is in the range of ≥ 10 wt.-% to ≤ 22 wt.-%. Particularly preferably, in the range of ≥ 12 wt.-% to ≤ 20 wt.-%.

As is well known to the person skilled in the art, the NCO content of the isocyanate prepolymer can be achieved using polyols and isocyanate compounds in appropriate amounts and having the required characteristics. For this purpose, the amount of polyols is kept lower than that of the isocyanate compounds to avoid the formation of polyurethane. The NCO content in the range prescribed hereinabove, is obtained using at least one polyester polyol (P) and at least one polyisocyanate (PI). The at least one polyester polyol (P) has an average functionality in the range of ≥ 1.9 to ≤ 2.5 and an OH value in the range of ≥ 10 mgKOH/g to ≤ 500 mgKOH/g.

In the context of the present invention, the term "polyol" refers to the polymer backbone containing two or more hydroxyl groups, sometimes also referred as polyalcohols. Polyesteralcohols, also referred to as "polyesterols" are the products of condensation polymerization between polyhydroxy and polyacid monomers using the polyhydroxy component in stoichiometric excess. Although, the process of combining polyacids and polyalcohols to form polyesterols is generically similar in every case, the individual monomers are obtained from vastly different building blocks and sources. In fact, each building block can be obtained by multiple routes, each one having advantages, disadvantages and economic sensitivities. Accordingly, the at least one polyester polyol (P), as described hereinabove or hereinbelow, is not limited by the process for preparing and/or obtaining the same. Such processes are known to the person skilled in the art.

The at least one polyester polyol (P) having the average functionality in the range of ≥ 1.9 to ≤ 2.5, preferably in the range of ≥ 1.9 to ≤ 2.4 or ≥ 1.9 to ≤ 2.3, more preferably in the range of ≥ 1.9 to S 2.2 or ≥ 1.95 to ≤ 2.1, most preferably 2.0 and the OH value in the range of ≥ 10 mgKOH/g to ≤ 500 mgKOH/g encompasses all suitable polyester polyols, such as but not limited to, an amorphous polyester polyol, a crystalline polyester polyol, a semi-crystalline polyester polyol and a mixture thereof, as is known to the person skilled in the art. By the term "amorphous", it is referred to a polyester polyol having no melt transition when measured using differential scanning calorimetry (DSC). The term "crystalline" is herein defined as follows: in DSC at a heating or cooling rate of 20 K/min, if the amount of the heat absorption of a material at the heat absorption peak corresponding to the melting point is not less than 50 J/g, the material is crystalline.

Accordingly, the term "semi-crystalline" refers to the polyester polyols having characteristics in between that of the amorphous polyester polyol and the crystalline polyester polyol, as descried hereinabove. The semi-crystalline polyester polyol includes a reduced degree of crystallinity compared to the crystalline polyester polyol and an increased degree of crystallinity compared with the amorphous polyester polyol.

The OH value in the range of ≥ 10 mgKOH/g to ≤ 500 mgKOH/g of the at least one polyester polyol (P) ensures that the prepreg binder composition has the viscosity somewhere between that of a solid or liquid material i.e. liquid pasty material.

For the purpose of the present invention, the OH value of the at least one polyester polyol (P) is determined according to standard techniques well known to the person skilled in the art. Particularly, the OH value in the present invention is determined according to DIN 53240. Preferably, the OH value of the at least one polyester polyol (P), as described hereinabove, is in the range of ≥ 10 mg KOH/g to ≤ 450 mg KOH/g, or ≥ 10 mg KOH/g to ≤ 400 mg KOH/g, or ≥ 10 mg KOH/g to ≤ 350 mg KOH/g determined according to DIN 53240. More preferably, it is in the range of ≥ 10 mg KOH/g to ≤ 300 mg KOH/g, or ≥ 15 mg KOH/g to ≤ 300 mg KOH/g, or ≥ 15 mg KOH/g to ≤ 250 mg KOH/g determined according to DIN 53240. Most preferably, it is in the range of ≥ 20 mg KOH/g to ≤ 250 mg KOH/g, or ≥ 20 mg KOH/g to ≤ 200 mg KOH/g, or ≥ 20 mg KOH/g to ≤ 150 mg KOH/g determined according to DIN 53240. In an embodiment, the at least one polyester polyol (P) has OH value in the range of ≥ 20 mg KOH/g to ≤ 120 mg KOH/g determined according to DIN 53240.

The at least one polyester polyol (P), as described hereinabove, can have any number average molecular weight Mn such that the average functionality is in the range of ≥ 1.9 to ≤ 2.5 and the OH value is in the range of ≥ 10 mgKOH/g to ≤ 500 mgKOH/g.

The at least one polyester polyol (P) is the reaction product of a polyacid component, for e.g. polyacid, polyacid anhydride, polyacid ester and polyacid halide, and a stoichiometric excess of a polyalcohol.

Suitable polyacid component can be selected from the group consisting of an aromatic polyacid, aliphatic polyacid and mixtures thereof. Such polyacids are, but not limited to, for e.g., diacids (e.g., dicarboxylic acids), triacids (e.g., tricarboxylic acids), and higher order acids, examples of which include aromatic dicarboxylic acids, anhydrides and esters thereof, for e.g. terephthalic acid, isophthalic acid, dimethyl terephthalate, diethyl terephthalate, phthalic acid, phthalic anhydride and combinations thereof. Aliphatic dicarboxylic acids and anhydrides thereof include maleic acid, maleic anhydride, succinic acid, succinic anhydride, glutaric acid, glutaric anhydride, adipic acid, pimelic acid, suberic acid, azelaic acid, sebacic acid, chlorendic acid, 1,2,4-butane-tricarboxylic acid, decanedicarboxylic acid, octadecanedicarboxylic acid, dimeric acid, dimerized fatty acids, trimeric fatty acids, and fumaric acid), and alicyclic dicarboxylic acids (e.g. 1,3-cyclohexanedicarboxylic acid, and 1,4-cyclohexanedicarboxylic acid), and combinations thereof.

Preferably at least one of the polyacid component and the polyalcohol includes an aromatic group. Particularly preferably, the polyacid component is an aromatic polyacid. Preferably, the polyacid component is an aromatic dicarboxylic acid selected from the group consisting of terephthalic acid, isophthalic acid, dimethyl terephthalate, diethyl terephthalate, phthalic acid, phthalic anhydride and combinations thereof. More preferably, selected from the group consisting of terephthalic acid, isophthalic acid, dimethyl terephthalate, diethyl terephthalate, phthalic acid, phthalic anhydride, methyl-hexahydrophthalic acid and combinations thereof. Most preferably, selected from the group consisting of terephthalic acid, isophthalic acid and phthalic acid.

Suitable polyalcohols can also be selected from the group consisting of an aromatic polyalcohol, aliphatic polyalcohol and mixtures thereof. Such polyalcohols are diols, triols and polyols, preferably diols, having 3 to 20 carbon atoms, preferably 4 to 20 carbon atoms.

Preferred polyalcohols are selected from the group consisting of propane diol, butane diol, butenediol, butynediol, pentane diol, pentenediol, pentynediol, hexanediol, octanediol, decanediol, diethylene glycol, triethylene glycol, tetraethylene glycol, propylene glycol, dimethylpropane diol, cyclohexanedimethanol, cyclohexanediol, glycerol, tetramethylene glycol, methylpentanediol, nonanediol, methyloctanediol, trimethylolpropane, pentaerythritol, sorbitol, glucose, isomers and combinations thereof. More preferably, selected from the group consisting of butane diol, pentane diol, propylene glycol, dimethylpropane diol, tetramethylene glycol, isomers and combinations thereof. Most preferably, selected from the group consisting of propylene glycol, dimethylpropane diol, tetramethylene glycol, isomers and combinations thereof. In one preferred embodiment, the polyalcohol is 2,2-dimethylpropane-1,3-diol (also referred as neopentyl glycol).

Suitable at least one polyester polyol (P) can also be obtained commercially under a variety of trade designations such as, but not limited to, Dynacoll^{®} from Evonik Industries, Lupraphen^{®} from BASF, Fineplus^{®} from DIC Performance Resins GmbH and Stepanpol^{®} from Stepan Company.

The term "polyisocyanate", as used herein, refers to an isocyanate comprising at least two-N=C=O groups (or NCO groups), such as diisocyanates or triisocyanates, as well as dimers of the isocyanates discussed herein. The most chemically relevant attribute of isocyanate chemistry is its reactivity with molecules having active hydrogens. Such active hydrogens are typically found in molecules having alcohol and amine functionalities and water.

The at least one polyisocyanate (PI) includes those having two or more of the isocyanato groups attached thereto. Preferably, the at least one polyisocyanate (PI) comprises a plurality of NCO functional groups, e.g. 2,3,4,5,6,7 or 8 functional groups, or any value or ranges of values therein. Moreover, the at least one polyisocyanate (PI) can include monomeric, polymeric and mixtures thereof. By the term "polymeric", it is referred to the polymeric grade or form of the at least one polyisocyanate (PI) comprising different oligomers and homologues.

For the purpose of the present invention, the at least one polyisocyanate (PI) is selected from the group consisting of an aromatic polyisocyanate (PI1), aliphatic polyisocyanate (PI2), cycloaliphatic polyisocyanate (PI3) and mixtures thereof. In an embodiment, the at least one polyisocyanate (PI) is at least one diisocyanate of the abovementioned aliphatic, cycloaliphatic and aromatic polyisocyanates. Representative examples of these preferred diisocyanates may be found, for example, from US 4,385,133, US 4,522,975 and US 5,167,899.

Suitable cycloaliphatic polyisocyanates (PI23) include those in which two or more of the isocyanato groups are attached directly to the cycloaliphatic ring. Aromatic polyisocyanates (PI1) include those in which two or more of the isocyanato groups are attached directly and/or indirectly to the aromatic ring.

In an embodiment, the aliphatic polyisocyanates (PI2) and cycloaliphatic polyisocyanates (PI3) can comprise 6 to 100 carbon atoms linked in a straight chain or cyclized and having at least two reactive isocyanate groups.

Examples of suitable aliphatic polyisocyanate (PI2) include tetramethylene 1,4-diisocyanate, pentamethylene 1,5-diisocyanate, hexamethylene 1,6-diisocyanate, decamethylene diisocyanate, 1,12-dodecane diisocyanate, 2,2,4-trimethyl-hexamethylene diisocyanate, 2,4,4-trimethyl-hexamethylene diisocyanate and 2-methyl-1,5-pentamethylene diisocyanate.

Accordingly, in an embodiment the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g, and
   (PI2) at least one aliphatic polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA) with the isocyanate prepolymer of step (A) to obtain a prepreg binder composition having a viscosity in the range of ≥ 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

Examples of suitable cycloaliphatic polyisocyanate (PI3) include cyclobutane-1,3-diisocyanate, 1,2-, 1,3- and 1,4-cyclohexane diisocyanates, 2,4- and 2,6-methylcyclohexane diisocyanate, 4,4'- and 2,4'-dicyclohexyldiisocyanates, 1,3,5-cyclohexane triisocyanates, isocyanatomethylcyclohexane isocyanates, isocyanatoethylcyclohexane isocyanates, bis(isocyanatomethyl)cyclohexane diisocyanates, 4,4'- and 2,4'-bis(isocyanato-methyl) dicy-clohexane, isophorone diisocyanate and 4,4'-Diisocyanatodicyclohexylmethane.

In another embodiment the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g,
      and
   (PI3) at least one cycloaliphatic polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA) with the isocyanate prepolymer of step (A) to obtain a prepreg binder composition having a viscosity in the range of z 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

In a preferred embodiment, the at least one polyisocyanate (PI) is an aromatic polyisocyanate (PI1). The aromatic polyisocyanates are widely available, cheaper than the aliphatic polyisocyanate (PI2) and result in faster curing at elevated temperature.

Suitable aromatic polyisocyanate (PI1) are selected from the group consisting of 1,2-, 1,3-, and 1,4-phenylene diisocyanates, triphenyl methane-4,4',4"-triisocyanate, naphthylene-1,5-diisocyanate, 2,4- and 2,6-toluene diisocyanate, 2,4'-, 4,4'- and 2,2-biphenyl diisocyanates, 2,2'-, 2,4'- and 4,4'-diphenylmethane diisocyanate, polyphenyl polymethylene polyisocyanates, 1,2-, 1,3- and 1,4-xylylene diisocyanates and m-tetramethylxylyene diisocyanate (TMXDI).

Preference as the aromatic polyisocyanate (PI1) is given to using diphenylmethane diisocyanate (MDI). MDI consists of mainly 4,4'- and 2,4'-diphenylmethane diisocyanate (monomeric MDI or MMDI) and the higher homologues with three or more phenyl rings. MDI may also be used here as a mixture with its derivatives. In that case MDI may more preferably comprise up to 10 wt.-%, more preferably still up to 5 wt.-%, of carbodiimide, uretdione-, or uretonimine-modified diphenylmethane diisocyanate, especially carbodiimide modified diphenylmethane diisocyanate. The mixtures of the higher homologues which always contain significant amounts of the 2-ring compounds, also referred to as polymeric MDI, can also be employed. In a preferred embodiment, the at least one polyisocyanate (PI) is 4,4'-diphenylmethane diisocyanate. MDI or isomers thereof can be obtained using suitable techniques, which are known to the person skilled in the art. It can also be obtained commercially under a variety of trade designations such as, but not limited to, Lupranat^{®} from BASF.

Accordingly, in a particularly preferred embodiment the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g,
      and
   (PI1) at least one aromatic polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA) with the isocyanate prepolymer of step (A) to obtain a prepreg binder composition having a viscosity in the range of ≥ 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

In another embodiment, the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g,
      and
   (PI) 4,4'-diphenylmethane diisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA) with the isocyanate prepolymer of step (A) to obtain a prepreg binder composition having a viscosity in the range of ≥ 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

Suitable amounts of the at least one polyester polyol (P) and the at least one polyisocyanate (PI) may be selected to obtain the isocyanate prepolymer having NCO content in the range of ≥ 8 wt.-% to ≤ 22 wt.-%.

Suitable conditions for the prepolymer step are known to the person skilled in the art. The prepolymer step can be carried out in the presence of any mixing means, such as but not limited to, a stirrer, if required. The choice of such mixing means is known to the person skilled in the art.

It is additionally possible, optionally at least one chain extender (CE) is added in the prepolymer step, described hereinabove. Where low molecular weight chain extenders (CE) are used, it is possible to use chain extenders that are known to the person skilled in the art. These are preferably low molecular weight compounds having at least two isocyanate-reactive groups and used for molecular weights of ≤ 499 g/mol, more preferably in the range of ≥ 50 g/mol to ≤ 400 g/mol, and more particularly in the range of ≥ 60 to ≤ 350 g/mol. Examples of such at least one chain extender (CE) include aliphatic, cycloaliphatic and/or araliphatic or aromatic diols having 2 to 14, preferably 2 to 10 carbon atoms, such as ethylene glycol, 1,3-propanediol, 1,4-butanediol, 1,6-hexanediol, 1,10-decanediol and bis(2-hydroxyethyl)hydroquinone, 1,2-, 1,3-, 1,4-dihydroxycyclohexane, diethylene glycol, dipropylene glycol, tripropylene glycol, triols, such as 1,2,4-, 1,3,5-trihydroxycyclohexane, glycerol and trimethylolpropane, and hydroxyl-containing polyalkylene oxides of low molecular weight that are based on ethylene oxide and/or on 1,2-propylene oxide and on the aforementioned diols and/or triols as starter molecules. Further possible low molecular weight chain extenders and/or crosslinking agents are specified for example in Szycher's Handbook of Polyurethanes, by Michael Szycher, 2nd edition, 2013, Chapter 6.

The isocyanate prepolymer obtained, as described hereinabove, is now mixed with the at least one epoxy compound (EP) and the at least one catalyst (CA) in step (B) of the process described hereinabove, to obtain the prepreg binder composition having the viscosity in the range of ≥ 10 Pa.s to ≤ 1000 Pa.s.

The prepreg binder composition obtained in the step (B) is a liquid pasty material and has a typical open time ranging between several minutes to hours at room temperatures or even below. However, in order to protect the composition from adverse conditions, for instance of humidity, and to render it storage stable for even longer periods i.e. for weeks or months, it is beneficial to wrap it in a protective sheet layer, for instance in a plastic material. The prepreg binder composition, under humid conditions, reacts with the water molecule in the atmosphere to form a urea compound i.e. curing occurs, thereby increasing the viscosity of the B-stage material and rendering it thermoset. The storage stability can be further increased by storing the material at low temperatures. By the term "low temperature", it is referred to the temperature where curing has not occurred, preferably at temperature ≤ 80°C, more preferably at temperature below room temperature or even below 0°C.

For the purpose of the present invention, the open time is defined as the time within which the viscosity of the prepreg binder composition at constant temperature increases to an extent such that the stirring force required exceeds the given stirring force of the Shyodu gel timer, type 100, version 2012. For this purpose, a 200 g portion of the sample is prepared, mixed in a Speedmixer at 1950 rpm for 1 minute, and 130 g of the sample stirred at room temperature or elevated reaction temperature in an oven, in a PP plastic beaker with a diameter of 7 cm, using a Shyodu gel timer, type 100, version 2012 and an associated wire stirrer at 20 rpm, until the viscosity and hence the required stirring force exceeded the stirring force of the gel timer.

As the at least one epoxy compound (EP), it is possible to use all epoxide containing compounds which are customarily used for preparing epoxy resins.

Suitable at least one epoxy compound (EP) are compounds comprising one or more epoxide groups, preferably two, three or more epoxide groups per molecule. These compounds are preferably liquid at 25°C. Here it is also possible to use mixtures of such compounds, these mixtures being preferably likewise liquid at 25°C.

Examples of such compounds containing epoxide groups and able to be used for the purposes of the invention are:
I) Polyglycidyl and poly([beta]-methylglycidyl) esters, obtainable by reacting a compound having at least two carboxyl groups in the molecule and in each case epichlorohydrin and [beta]-meth-ylepichlorohydrin. This reaction is advantageously catalyzed by the presence of bases.
   Aliphatic polycarboxylic acids can be used, for example, as compound having at least two carboxyl groups. Examples of such aliphatic polycarboxylic acids are oxalic acid, succinic acid, glutaric acid, adipic acid, pimelic acid, suberic acid, azelaic acid, and dimerized or trimerized linoleic acid. Further it is possible as well to use cyclic aliphatic acids, such as tetrahydrophthalic acid, 4-methyltetrahydrophthalic acid, hexahydrophthalic acid or 4-methylhexahydrophthalic acid. Aromatic carboxylic acids as well, such as phthalic acid, isophthalic acid or terephthalic acid, and also any desired mixtures of these carboxylic acids, can be used.
II) Polyglycidyl or poly([beta]-methylglycidyl) ethers, obtainable by reaction of a compound having at least two alcohol hydroxyl groups and/or phenolic hydroxyl groups with epichlorohydrin or [beta]-methylepichlorohydrin under alkaline conditions or in the presence of an acidic catalyst and subsequent treatment with a base.

The glycidyl ethers of this type are derived, for example, from linear alcohols, such as ethylene glycol, diethylene glycol or higher poly(oxyethylene) glycols, propane-1,2-diol or poly(oxypropylene) glycols, propane-1,3-diol, butane-1,4-diol, poly(oxytetramethylene) glycol, pentane-1,5-diol, hexane-1,6-diol, hexane-2,4,6-triol, glycerol, 1,1,1-trimethylolpropane, pentaerythritol or sorbitol, and from polyepichlorohydrins.

Further glycidyl ethers of this type are obtainable from cycloaliphatic alcohols, such as 1,4-cyclohexanedimethanol, bis(4-hydroxycyclohexyl)methane or 2,2-bis(4-hydroxycyclohexyl)propane, or from alcohols which carry aromatic groups and/or other functional groups, such as N,N-bis(2-hydroxyethyl)aniline or p,p'-bis(2-hydroxyethylamino)diphenylmethane.

The glycidyl ethers may also be based on monocyclic phenols, such as p-tert-butylphenol, resorcinol or hydroquinone, or on polycyclic phenols, such as bis(4-hydroxyphenyl)methane, 4,4'-dihydroxybiphenyl, bis(4-hydroxyphenyl) sulfone, 1,1,2,2-tetrakis(4-hydroxyphenyl)ethane, 2,2-bis(4-hydroxyphenyl)propane or 2,2-bis(3,5-dibromo-4-hydroxyphenyl)propane.

Further compounds which contain hydroxyl groups and which are suitable for preparing the glycidyl ethers are novolaks, obtainable by condensing aldehydes, such as formaldehyde, acetaldehyde, chloraldehyde or furfuraldehyde, with phenols or bisphenols, which may be unsubstituted or substituted, as for example by chlorine atoms or C1 to C9 alkyl groups, such as phenol, 4-chlorophenol, 2-methylphenol or 4-tert-butylphenol.
III) Poly(N-glycidyl) compounds, obtainable by dehydrochlorination of reaction products of epichlorohydrin with amines which contain at least two amine-bonded hydrogen atoms. Examples of such amines are aniline n-butylamine, bis(4-aminophenyl)methane, m-xylylenediamine or bis(4-methylaminophenyl)methane. The poly(N-glycidyl) compounds also include triglycidyl isocyanurates, N,N'-diglycidyl derivatives of cycloalkyleneureas, such as ethyleneurea or 1,3-propyl-eneurea, and diglycidyl derivatives of hydantoins, such as 5,5-dimethylhydantoin.
IV) Poly(S-glycidyl) compounds, such as di-S-glycidyl derivatives which are obtainable from dithiols, as for example ethane-1,2-dithiol or bis(4-mercaptomethylphenyl) ether.
V) Cycloaliphatic epoxy resins, such as bis(2,3-epoxycyclopentyl) ether, 2,3-epoxycyclopentyl glycidyl ether, 1,2-bis(2,3-epoxycyclopentyloxy)ethane or 3,4-epoxycyclohexylmethyl 3',4'-epoxycyclohexanecarboxylate.
VI) Monofunctional epoxy resins, such as (2-ethylhexyl) glycidyl ether, isopropyl glycidyl ether, butyl glycidyl ether or cresyl glycidyl ether.

Within the bounds of the invention it is likewise possible to use epoxy resins in which the 1,2-epoxy group is bonded to different heteroatoms or functional groups. These compounds include N,N,O-triglycidyl derivative of 4-aminophenol, the glycidyl ether/glycidyl esters of salicylic acid, N-glycidyl-N'-(2-glycidyloxypropyl)-5,5-dimethylhydantoin and 2-glycidyloxy-1,3-bis(5,5-dimethyl-1-glycidylhydantoin-3-yl)propane.

Particularly preferable at least one epoxy compound (EP) are the compounds of classes (I) and (II), especially those of class (II). These can also be obtained commercially under a variety of trade designations such as, but not limited to, Epikote^{™} from Resolution Performance Products.

The amount of the at least one epoxy compound (EP), as described hereinabove, is in the range of ≥ 0.01 wt.-% to ≤ 30 wt.-% by weight of the total weight of the prepreg binder composition. Preferably, it is in the range of ≥ 0.05 wt.-% to ≤ 30 wt.-%, or ≥ 0.05 wt.-% to ≤ 27 wt.-%, or ≥ 0.05 wt.-% to ≤ 25 wt.-% by weight of the total weight of the prepreg binder composition. More preferably, it is in the range of ≥ 0.08 wt.-% to ≤ 25 wt.-%, or ≥ 0.08 wt.-% to ≤ 22 wt.-%, or ≥ 0.08 wt.-% to ≤ 20 wt.-% by weight of the total weight of the prepreg binder composition. Most preferably, it is in the range of ≥ 0.08 wt.-% to ≤ 17 wt.-%, or ≥ 0.08 wt.-% to ≤ 15 wt.-%, or ≥ 0.08 wt.-% to ≤ 12 wt.-% by weight of the total weight of the prepreg binder composition. In an embodiment, the amount of the at least one epoxy compound (EP) is in the range of ≥ 0.1 wt.-% to ≤ 12 wt.-% by weight of the total weight of the prepreg binder composition.

Curing of the B-stage material at high temperatures is carried out in the presence of the at least one catalyst (CA). For the purpose of the present invention, the at least one catalyst (CA) is:
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

Typically, a temperature less than the curing temperature, preferably ≤ 80°C is provided for efficient mixing of the components in step (B) and to prevent hardening of the resulting prepreg binder composition. Preferably, the temperature is in the range of ≥ 25°C to ≤ 75°C, more preferably ≥ 25°C to ≤ 70°C, or ≥ 30°C to ≤ 70°C, most preferably ≥ 35°C to ≤ 65°C. At temperatures beyond 80°C, the B-stage material hardens and renders the material unsuitable for re-shaping or re-molding and/or impregnating it to obtain the prepreg. That is, to say, the curing of the material takes place.

Employed as alkali metal or alkaline earth metal salt here is a compound which accelerates the reaction between the isocyanate prepolymer and the at least one epoxy compound (EP), as described hereinabove. These compounds include, in particular, salts of sodium, lithium, magnesium, and potassium, and ammonium compounds, preferably lithium or magnesium, with any desired anions, preferably with anions of organic acids such as carboxylates, and more preferably of inorganic acids, such as nitrates, halides, sulfates, sulfites, and phosphates and even more preferably with anions of monoprotic acids, such as nitrates or halides, and especially nitrates, chlorides, bromides or iodides. Preference is given to using lithium halide salt (LH), such as but not limited to lithium chloride and lithium bromide. Particularly preferably, the lithium halide salt (LH) is lithium chloride. The alkali metal or alkaline earth metal salts of the invention may be used individually or as mixtures. Preferably, besides the alkali metal or alkaline earth metal salt, there are no further compounds used which accelerate the reaction of isocyanates with isocyanate-reactive groups.

For the purpose of the present invention, the at least one catalyst (CA) is (CA1) a mixture obtainable by introducing an alkali metal or alkaline earth metal salt into a compound R-NH-CO-XR', wherein X is selected from the group consisting of NH, O or S, preferably X is NH or O. In the at least one catalyst (CA1), when X is selected as NH, the at least one catalyst (CA1) comprises a urea and optionally biuret group. Alternatively, when X is selected as O, the at least one catalyst (CA1) comprises a urethane group.

Accordingly, in a preferred embodiment, the at least one catalyst (CA1) is:
(CA11) a mixture obtainable by introducing an alkali metal or alkaline earth metal salt into a compound R-NH-CO-OR' comprising urethane groups included, where R is other than hydrogen and/or other than COR", or
(CA12) a mixture obtainable by introducing an alkali metal or alkaline earth metal salt into a urea compound, the urea compound having an average molecular weight in the range of ≥ 500 g/mol to ≤ 15000 g/mol and optionally comprising biuret group.

In an embodiment, the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g,
      and
   (PI) at least one polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA1) with the isocyanate prepolymer of step (A) to obtain a prepreg binder composition having a viscosity in the range of ≥ 10 Pa.s to ≤ 1000 Pa.s,
wherein the at least one catalyst (CA1) is:
(CA11) a mixture obtainable by introducing an alkali metal or alkaline earth metal salt into a compound R-NH-CO-OR' comprising urethane groups included, where R is other than hydrogen and/or other than COR", or
(CA12) a mixture obtainable by introducing an alkali metal or alkaline earth metal salt into a urea compound, the urea compound having an average molecular weight in the range of ≥ 500 g/mol to ≤ 15000 g/mol and optionally comprising biuret group.

In a preferred embodiment, the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g,
      and
   (PI) at least one polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA1) with the isocyanate prepolymer of step (A) to obtain a prepreg binder composition having a viscosity in the range of ≥ 10 Pa.s to ≤ 1000 Pa.s,
wherein the at least one catalyst (CA1) is:
(CA11) a mixture obtainable by introducing the alkali metal or alkaline earth metal salt into a compound R-NH-CO-OR' comprising urethane groups included, where R is other than hydrogen and/or other than COR".

As is used hereinabove, compound comprising urethane groups is taken to mean any desired compounds which are in solid or preferably liquid form at 20°C and which comprise at least one urethane group R-NH-CO-OR', where R is other than hydrogen and/or other than COR".

The compound comprising urethane groups in the at least one catalyst (CA1) as CA11, described hereinabove, is obtainable preferably by reaction of at least one second polyisocyanate (SPI) with at least one mono- or polyalcohol (PAL). By the term "polyalcohol", it is referred to compounds having at least one isocyanate-reactive hydrogen atom i.e. at least one OH group. Preferred in this context are compounds which are liquid at 50°C, more preferably those liquid at room temperature. For the purposes of the present invention, a "liquid" substance or component here is one which at the stated temperature has a viscosity of not more than 10 Pa.s. When no temperature is stated, the datum is based on 20°C. The measurement is made according to ASTM D445-11. The compounds comprising urethane groups preferably have at least two urethane groups. The molecular weight of the compounds comprising urethane groups here is preferably in the range of ≥ 200 g/mol to ≤ 15000 g/mol, more preferably in the range of ≥ 300 g/mol to ≤ 10000 g/mol, and more particularly in the range of ≥ 500 g/mol to ≤ 1300 g/mol.

Although, aromatic polyisocyanate (SPI1), aliphatic polyisocyanate (SPI2), cycloaliphatic polyisocyanate (SPI3) and mixtures thereof, as described hereinabove, can be used as suitable at least one second polyisocyanate (SPI), preferred is aromatic polyisocyanate (SPI1). In a particularly preferred embodiment, the at least one aromatic polyisocyanate (SPI1) and the at least one aromatic polyisocyanate (PI1) are identical. The at least one polyalcohol (PAL) having at least one isocyanate-reactive hydrogen atom, such as alcohols, monoalcohols for example, such as but not limited to methanol, ethanol, propanol, butanol, pentanol, hexanol, or longer-chain propoxylated or ethoxylated monools, such as poly(ethylene oxide) monomethyl ether, such as but not limited to the monofunctional Pluriol^{®} products from BASF, for example, dialcohols, such as but not limited to ethylene glycol, diethylene glycol, triethylene glycol, propylene glycol, dipropylene glycol, butanediol and hexanediol. For preparing the compound containing urethane groups, both isocyanates and polyols can be used in a stoichiometric excess. Where monoalcohols are used, isocyanate groups and OH groups may also be used in a stoichiometric ratio. The reaction takes place customarily at temperatures between 20°C and 120°C, as for example at 80°C. The at least one second polyisocyanate (SPI), used for preparing the compound comprising urethane groups, is preferably an isomer or homolog of diphenylmethane diisocyanate, as described hereinabove.

The compound containing urethane groups can also be obtained via alternative reaction pathways, as for example by reacting a carbonate with a monoamine to form a urethane group. For this reaction, for example, a propylene carbonate in a slight excess (1.1 eq) is reacted with a monoamine, as for example a Jeffamine^{®} M 600 from Huntsman, at 100°C. The resulting urethane may likewise be used as compound comprising urethane group.

The mixtures comprising the alkali metal or alkaline earth metal salt and the compound comprising urethane groups, as described hereinabove, may be obtained for example, by mixing the alkali metal or alkaline earth metal salt into the compound comprising urethane groups, at room temperature or at elevated temperature. For this purpose, it is possible to use any mixer, an example being a simple stirrer. The alkali metal or alkaline earth metal salt in this case may be used as the pure substance or in the form of a solution, an example being a solution in mono or polyfunctional alcohols, such as methanol, ethanol, or the at least one chain extender (CE), as described hereinabove, or water. In an embodiment, commercially available prepolymer-based isocyanate is admixed directly with the dissolved salt. Isocyanate prepolymers of this kind are available commercially, for example, from BASF under the trade name Lupranat^{®} MP 102.

In one particularly preferred embodiment of the present invention, the alkali metal or alkaline earth metal salt is dissolved in the at least one polyalcohol (PAL), and this solution is then mixed, optionally at elevated temperature, with the at least one second polyisocyanate (SPI).

Particular preference for preparing the compound containing urethane groups is given to using a monol having a molecular weight in the range of ≥ 30 g/mol to ≤ 15000 g/mol, preferably in the range of ≥ 100 g/mol to ≤ 900 g/mol and, in one particularly preferred embodiment, in the range of ≥ 400 g/mol to ≤ 600 g/mol.

The amount of the alkali metal or alkaline earth metal ions per urethane group in CA11 is in the range of ≥ 0.0001 to ≤ 3.5, preferably in the range of ≥ 0.01 to ≤ 1.0, more preferably ≥ 0.05 to ≤ 0.9, and more particularly ≥ 0.1 to ≤ 0.8, based in each case on the number of alkali metal or alkaline earth metal ions and urethane groups (per equivalent of urethane groups).

The amount of alkali metal or alkaline earth metal ions per isocyanate group in the catalyst CA11 is preferably in the range of ≥ 0.0001 to ≤ 0.3, more preferably in the range of ≥ 0.0005 to ≤ 0.02, and more particularly in the range of ≥ 0.001 to ≤ 0.01 equivalents, based on the number of alkali metal or alkaline earth metal ions and urethane groups.

Between the alkali metal or alkaline earth metal salt in CA11, preferably at 25°C, there is a thermally reversible interaction with the urethane group-containing compounds, while preferably at temperatures in the range of ≥ 80°C to ≤ 200°C, the catalytically active compound is in free form.

In another embodiment, the at least one catalyst (CA1) is (CA12) a mixture obtainable by introducing an alkali metal or alkaline earth metal salt into a urea compound, the urea compound having an average molecular weight in the range of ≥ 500 g/mol to ≤ 15000 g/mol and optionally comprising biuret group.

Accordingly, the process for preparing the prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g, and
   (PI) at least one polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA1) with the isocyanate prepolymer of step (A) to obtain a prepreg binder composition having a viscosity in the range of ≥ 10 Pa.s to ≤ 1000 Pa.s,
wherein the at least one catalyst (CA1) is:
(CA12) a mixture obtainable by introducing the alkali metal or alkaline earth metal salt into a urea compound, the urea compound having an average molecular weight in the range of ≥ 500 g/mol to ≤ 15000 g/mol and optionally comprising biuret group.

The lithium halide salt (LH') in CA12 is preferably in an amount in the range of ≥ 0.00015 to ≤ 0.025 and most preferably, it is in the range of ≥ 0.0005 to ≤ 0.02 moles per isocyanate equivalent.

WO 2010121898 A1 describes the catalyst CA12. The urea compound in CA12 is used in such an amount that the number of urea + biuret equivalents is in the range of ≥ 0.001 to ≤ 0.05 and most preferably in the range of ≥ 0.001 to ≤ 0.2 per isocyanate equivalent. Preferably, the number of urea + biuret equivalents in the urea compound per mole of lithium halide (LH') is in the range of ≥ 0.5 to ≤ 60 and particularly preferably in the range of ≥ 0.5 to ≤ 30. These compounds are a reaction product of at least one second polyisocyanate (SPI), as described hereinabove, and an amine.

The amines used to prepare the urea compound in CA12 may be monoamines or polyamines. Preferably monoamines, optionally comprising a small amount of polyamines, are used. The average amine functionality of such mixtures preferably ≤ 1.2. Most preferably, only monoamines are used. Such amines preferably are primary amines.

The molecular weight of the amines, as described hereinabove, is selected in such a way that once reacted with the at least one second polyisocyanate (SPI), the molecular weight of the urea compound obtained falls within the above ranges. In general, the molecular weight of the amine is in the range of ≥ 200 g/mol to ≤ 7500 g/mol, preferably in the range of ≥ 200 g/mol to ≤ 4500 g/mol and most preferably in the range of ≥ 200 g/mol to ≤ 3000 g/mol.

The amines may be selected from those known in the art like amine-terminated hydrocarbons, polyesters, polyethers, polycaprolactones, polycarbonates, polyamides and mixtures thereof. Most preferred are amine-terminated polyoxyalkylene monoamines and more in particular polyoxyethylene polyoxypropylene monoamines. Preferably, the oxypropylene content in these polyoxyalkylene monoamines is at least 50 wt.-% and more preferably at least 75 wt.-% calculated on the total weight of the monoamine molecule. Preferably, the polyoxyalkylene monoamines have a monoalkyl group at the other end of the polymer chain, the alkyl group having 1 to 8 and preferably 1 to 4 carbon atoms. Such monoamines are known in the art and therefore the present invention is not limited by the same. For instance, they may be made by alkoxylating an alkyl-monoalcohol having 1 to 8 carbon atoms and by subsequently converting the polyoxyalkylene monol into the monoamine. Such monoamines are commercially available. Examples are Jeffamine^{®} M 600 and M 2005 from Huntsman. Mixtures of monoamines may also be used.

In a particularly preferable embodiment, the urea compound in CA12 has an average molecular weight in the range of ≥ 500 g/mol to ≤ 15000 g/mol, preferably in the range of ≥ 600 g/mol to ≤ 10000 g/mol and more preferably in the range of ≥ 800 g/mol to ≤ 8000 g/mol. These urea compounds are the reaction product of the at least one second polyisocyanate (SPI) and a polyoxyalkylene monoamine comprising oxypropylene groups in an amount of at least 50 wt.-% based on the total weight of the monoamine molecule and having an average molecular weight in the range of ≥ 200 g/mol to ≤ 3000 g/mol and wherein the amine is the primary amine.

The at least one second polyisocyanate (SPI) and the amine, as described hereinabove, are combined, mixed and allowed to react. The reaction is exothermic and therefore does not require heating and/or catalysis, although heat and/or catalysis may be applied if this is regarded as convenient. For instance, it may be convenient to pre-heat the at least one second polyisocyanate (SPI) and/or the amine in the range of ≥ 40°C to ≤ 60°C and to mix them. After mixing, the temperature of the reacting mixture preferably is kept below 80°C in order to avoid side reactions, like for e.g. biuret formation. In order to ensure that all the amine reacts, a slight excess of the at least one second polyisocyanate (SPI) may be used. After at most 1 h, the reaction may be regarded as complete.

Since a small excess of the at least one second polyisocyanate (SPI) is used in preparing the urea compound in CA12 and since the urea compound in a next step is added to relatively large amount of the at least one second polyisocyanate (SPI), some of the urea groups might be converted to biuret groups. By controlling the reaction temperature and the temperature of the subsequent mixing steps, such biuret formation is avoided as much as possible.

For the purpose of the present invention, the urea compound and the alkali metal or alkaline earth metal salt, as described hereinabove, may be mixed in any order under ambient conditions or at elevated temperature in the range of ≥ 40°C to ≤ 70°C. Preferably, the alkali metal or alkaline earth metal salt is premixed with the urea compound and this mixture is subsequently added to the at least one second polyisocyanate (SPI) and mixed. Before mixing the alkali metal or alkaline earth metal salt and the urea compound, it may be convenient to dissolve the alkali metal or alkaline earth metal salt in a solvent, for e.g. an organic solvent such as but not limited to methanol or ethanol. The dissolved alkali metal or alkaline earth metal salt is then added to the urea compound. Subsequently, the solvent may be stripped off if desired. Premixing and mixing is conducted under ambient conditions or at temperatures lower than the curing temperature. Preferably, at elevated temperature in the range of ≥ 40°C to ≤ 70°C by means of normal stirring.

In another embodiment, the at least one catalyst (CA) is (CA2) a mixture obtainable by introducing an alkali metal or alkaline earth metal salt, as described hereinabove, into a compound having - CO-NH-CO- group, as described in WO 2013143841 A1. The compound having -CO-NH-CO-group may be, such as but not limited to, a compound having an acylurea group having the structure -CO-NH-CO-NH-. The catalyst CA2 may further also comprise a compound comprising a carboxamide group having the structure -CO-NH₂-.

The compound having the acylurea group may be the reaction product of at least one second polyisocyanate (SPI), as described hereinabove, and a compound comprising a carboxamide group having the structure -CO-NH₂-. In an embodiment, the alkali metal or alkaline earth metal salt before mixing with the compound having -CO-NH-CO- group and the at least one second polyisocyanate (SPI), as described hereinabove, be dissolved in an organic solvent, preferably an alcohol, for e.g. methanol or ethanol. The solvent may be stripped off, if desired. Pre-mixing and mixing may be conducted under ambient conditions or at elevated temperature, for instance at 40°C to 100°C.

The amount of the compound having -CO-NH-CO- group is such that the ratio of -CO-NH-CO-groups to the number of isocyanate groups is at most 1, preferably at most 0.01, more preferably at most 0.0015. Preferably, the number of equivalents of compounds having -CO-NH-CO- groups is smaller or equal to the number of equivalents of the at least one epoxy compound (EP).

The at least one catalyst (CA), as described hereinabove, is present in an amount in the range of ≥ 0.01 wt.-% to ≤ 10 wt.-% by weight of the total weight of the prepreg binder composition. Preferably, in the range of ≥ 0.05 wt.-% to ≤ 7 wt.-%, more preferably in the range of ≥ 0.1 wt.-% to ≤ 5 wt.-%, most preferably in the range of ≥ 1.0 wt.-% to ≤ 3 wt.-%.

Optionally, the at least one chain extender (CE), as described hereinabove, and/or at least one additive (AD) may also be present in the step (B). The at least one additive (AD) is selected from the group consisting of hydrolysis stabilizer, blowing agent, flame retardant, filler, UV stabilizer and antioxidant. The person skilled in the art is well aware of these additives and any further additives that may be added for the purpose of the present invention.

Accordingly, in an embodiment the process for preparing prepreg binder composition comprises the steps of:
(A) preparing an isocyanate prepolymer by mixing
   (P) at least one polyester polyol having an average functionality in the range of ≥ 1.9 to ≤ 2.5 and an OH value in the range of ≥ 10 mgKOH/g to ≤ 500 mgKOH/g,
      and
   (PI) at least one polyisocyanate,
   wherein the isocyanate prepolymer has an isocyanate content in the range of ≥ 8 wt.-% to ≤ 22 wt.-%,
      and
(B) mixing at least one epoxy compound (EP), at least one catalyst (CA), at least one chain extender (CE) and/or at least one additive (AD) with the isocyanate prepolymer of step (A) to obtain a prepreg binder composition having a viscosity in the range of ≥ 10 Pa.s to ≤ 1000 Pa.s,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or (CA2) a mixture obtainable by introducing an alkali metal or alkaline earth metal salt into a compound having -CO-NH-CO- group.

Additives for water adsorption used are preferably aluminosilicates, selected from the group of sodium aluminasilicates, potassium aluminasilicates, calcium aluminasilicates, caesium aluminasilicates, barium aluminasilicates, magnesium aluminasilicates strontium aluminasilicates, sodium aluminophosphates, potassium aluminophosphates, calcium aluminophosphates, and mixtures thereof. Particularly preferred are mixtures of sodium, potassium, and calcium aluminasilicates, used in castor oil as carrier substance.

The additive for water absorption preferably has an average particle size of ≤ 200 µm, more preferably ≤ 150 µm, and more particularly ≤ 100 µm. The pore size of the additive of the invention for water absorption is preferably in the range of ≥ 2 Å to ≤ 5 Å. As well as the inorganic additives for water adsorption, it is also possible to use known organic additives for water adsorption, such as orthoformates, triisopropylorthoformate for example.

If an additive for water absorption is added, it is added preferably in amounts greater than one part by weight, more preferably in the range from 1.2 to 2 parts by weight, based on the total weight of the prepreg binder composition.

Suitable flame retardants include, for example, tricresyl phosphate, tris(2-chloroethyl) phosphate, tris(2-chloropropyl) phosphate, tris(1,3-dichloropropyl) phosphate, tris(2,3-dibromo¬propyl) phosphate and tetrakis(2-chloroethyl) ethylene diphosphate.

Aside from the aforementioned halogen-substituted phosphates, it is also possible to use inorganic flame retardants such as red phosphorus, aluminum oxide hydrate, antimony trioxide, arsenic trioxide, ammonium polyphosphate and calcium sulfate or cyanuric acid derivatives, e.g., melamine, or mixtures of two or more flame retardants, e.g., ammonium phosphates and melamine, and also optionally starch and/or expandable graphite to confer flame retardancy to the present invention prepreg binder composition.

Suitable fillers include, such as but not limited to, silicatic minerals, examples being finely ground quartzes, phyllosilicates, such as antigorite, serpentine, hornblendes, amphibols, chrysotile, and talc; metal oxides, such as kaolin, aluminum oxides, titanium oxides and iron oxides, metal salts such as chalk, heavy spar and inorganic pigments, such as cadmium sulfide, zinc sulfide, and also glass and others. Preference is given to using kaolin (china clay), finely ground quartzes, aluminum silicate, and coprecipitates of barium sulfate and aluminum silicate.

Preferred for use as fillers are those having an average particle diameter in the range of ≥ 0.1 µm to ≤ 500 µm, more preferably in the range of ≥ 1 µm to ≤ 100 µm and more particularly in the range of ≥ 1 µm to ≤ 10 µm. Diameter in this context, in the case of non-spherical particles, refers to their extent along the shortest axis in space.

The resulting prepreg binder composition or stage-B material, as described hereinabove, has a wide range of Tg, or melting point typically in the range of ≥ 30°C to ≤ 80°C. The glass transition temperature or Tg or melting point is determined by differential scanning calorimetry (DSC) at heating or cooling rates of 20 K/min.

Another aspect of the present invention relates to a prepreg binder composition obtained by the process as described hereinabove. The viscosity of the prepreg binder composition is dependent on the isocyanate content of the prepolymer, the functionality and OH value of the at least one polyester polyol (P) and the amounts of the at least one epoxide (EP) and the at least one catalyst (CA), as described hereinabove. These prepreg binder components result in the B-stage material with viscosity in the range of ≥ 10 Pa.s to ≤ 1000 Pa.s and render it storage stable with sufficiently long open time to allow for its re-shaping or re-molding.

The prepreg binder composition of the present invention is advantageous in certain manners. In a preferred embodiment, the prepreg binder composition results in good tackiness or has a low tack when it is pressed at room temperature onto a surface and when removed, exhibits slight adhesion so that removal is accompanies by a noise but not by any continued sticking of the material. If the composition does not stick, it can be removed noiselessly and without problems. However, if the composition is too tacky, it forms strings on removal and a part thereof is left sticking on the applied surface. The right tackiness can improve handling of the prepreg binder composition according to the present invention.

Further, the prepreg binder composition as obtained in the present invention is storage stable at atmospheric conditions. The term "storage stable", preferably refers to the storage stability of the prepreg binder composition over the viscosity in the range of ≥ 10 Pa.s to ≤ 1000 Pa.s at 25°C after 24 h of production. Preferably, the viscosity changes in that range over a period of 24 hours by less than 20 %, more preferably by less than 15% and most preferable by less than 10 %, based on the viscosity value after production and storage for 24 hours at room temperature and atmospheric conditions. By the term "atmospheric conditions", it is referred to the temperature, pressure and humidity at 25°C. The prepreg binder composition thereby finds application not only for prepreg, but also for polyurethane based hot melt adhesives

Accordingly, in another aspect of the present invention, a process for preparing a prepreg comprises the steps of:
(A') preparing a prepreg binder composition as described hereinabove or as obtained by the process described hereinabove, and
(B') impregnating at least one fibrous support (FS) with the prepreg binder composition obtained in step (A') to obtain a prepreg.

The at least one fibrous support (FS) in the present invention consists of fibrous material (also often called reinforcing fibers). In general, any material of which the fibers consist is suitable, however, fibrous material of glass, carbon, plastics such as for example polyamide (aramid) or polyester, natural fibers or mineral fiber materials such as basalt fibers or ceramic fibers (oxide fibers based on aluminium oxides and/or silicon oxides) is preferably used. Mixtures of fiber types, such as for example fabric combinations of aramid and glass fibers, or carbon and glass fibers, can be used. Likewise, hybrid composite components with prepregs of different fibrous supports can also be produced.

Mainly because of their relatively low price, glass fibers are the most commonly used fiber types. In principle here, all types of glass-based reinforcing fibers are suitable (E glass, S glass, R glass, M glass, C glass, ECR glass, D glass, AR glass, or hollow glass fibers). Carbon fibers are generally
used in high performance composite materials, where the lower density in comparison to glass fibers with at the same time higher strength is also an important factor. Carbon fibers are industrially produced fibers made from carbon-containing starting materials which are converted by pyrolysis into carbon in graphite configuration. A distinction is made between isotropic and anisotropic: isotropic fibers have only low strength and lower industrial importance, anisotropic fibers exhibit high strength and rigidity with at the same time low elongation at break. Here all textile fibers and fiber materials obtained from plant and animal material (e.g. wood, cellulose, cotton, hemp, jute, flax, sisal or bamboo fibers) are described as natural fibers. Similarly also to carbon fibers, aramid fibers exhibit a negative coefficient of thermal expansion, i.e. become shorter on heating. Their specific strength and modulus of elasticity are markedly lower than that of carbon fibers. In combination with the positive coefficient of expansion of the matrix resin, highly dimensionally stable components can be manufactured. Compared to carbon fiber reinforced plastics, the compressive strength of aramid fiber composite materials is markedly lower. Well-known brand names for aramid fibers are Nomex^{®} and Kevlar^{®} from DuPont, or Teijinconex^{®}, Twaron^{®} and Technora^{®} from Teijin. The prepreg of the present invention can have a fiber content by volume of at least 50%, preferably in the range of ≥ 50% to ≤ 70% by volume.

Impregnation of the at least one fibrous support (FS), as described hereinabove, with the prepreg binder composition in step (B') can be carried out by any suitable techniques known to the person skilled in the art. The present invention is not limited by the choice of such procedure. However, preferably the prepreg binder composition is impregnated onto the at least one fibrous support (FS) using calendar impregnation method. More preferably, a continuous calendar impregnation method is adopted, wherein the at least one fibrous support (FS) is released continuously onto a release material. The thickness of the at least one fibrous support is adjusted based on the requirement and is then impregnated with the prepreg binder composition using suitable die. The impregnated fibrous support is further passed through calendar rolls. By employing the calendaring treatment by the calendar rolls, post-impregnation becomes possible by pressing between the calendar rolls and it becomes possible to achieve a further satisfactory impregnated fibrous support. Also, because thickness adjustment by a small amount is possible, it becomes possible to make the thickness of the prepreg as desired. At no time during the impregnation, the temperature should exceed the curing temperature. Preferably, the temperature should not exceed beyond 80 °C. As already described hereinabove, beyond 80°C hardening or curing of the prepreg binder composition takes place which renders it the behaviour of a thermoset.

The production of the prepregs can also be effected using a solvent. The principle of the process for the production of prepregs then consists in that firstly a solution of the prepreg binder composition is produced in a suitable solvent. This solution is then directly applied onto the at least one fibrous support (FS), whereby the at least one fibrous support (FS) becomes soaked/impregnated with this solution. Next the solvent is removed. Preferably the solvent is completely removed at low temperature, preferably at less than 80°C, e.g. by heat treatment or application of vacuum. After this, the storable prepregs again freed from the solvent can be further processed to composites at a later time. Suitable solvents for this purpose may be such as but not limited to, ketones (acetone, methyl ethyl ketone, methyl isobutyl ketone, cyclo-hexanone), ethers (tetrahydrofuran), esters (n-propyl acetate, n-butyl acetate, isobutyl acetate, 1,2-propylene carbonate, propylene glycol, methyl ether acetate).

Still another aspect of the present invention relates to a prepreg obtained by the process described hereinabove. The prepreg of the present invention is storage-stable, preferably for several days and even weeks and can thus at any time be further processed into composites. However, in order to protect the prepreg from adverse conditions, for instance of humidity, and to render it storage stable for longer periods i.e. for weeks or months, it is beneficial to wrap it in a protective sheet layer, for instance in a plastic material. The storage stability can be further increased by storing the prepreg at low temperatures. By the term "low temperature", it is referred to the temperature where curing has not occurred, preferably at temperature ≤ 80°C, more preferably at temperature below room temperature or even more preferably below 0°C.

Other suitable techniques such as reaction injection molding (RIM), reinforced reaction injection molding (RRIM), pultrusion process, in a cylinder mill or a doctor knife can also be employed.

Yet another aspect of the present invention relates to a process for preparing a polyurethane, comprising the step of:
(S1) heating the prepreg as described hereinabove or as obtained according to the process described hereinabove, preferably at a temperature > 80°C to obtain a polyurethane.

Heating can be conducted at temperatures where hardening occurs. Typically, the prepreg is heated at a temperature > 80°C, preferably in the range of ≥ 80°C to ≤ 250°C, more preferably ≥ 90°C to ≤ 200°C, most preferably ≥ 100°C to ≤ 200°C. The prepreg binder composition hardens due to the interplay of the at least one catalyst (CA) with the ingredients in the composition. This hardening may be carried out using suitable techniques known to the person skilled in the art. For instance, a heated mold or heating in an oven or a heat gun will result in curing of the prepreg, as described hereinabove. Upon curing, the viscosity of the prepreg binder composition is no longer in the range of ≥ 10 Pa.s to ≤ 1000 Pa.s, thereby resulting in the formation of polyurethane which has the characteristics of a thermoset material. Afterwards, in a differential scanning calorimetry measurement at a heating or cooling rate of 20 K/min, no further reactive step could be obtained upon heating to 250°C. The so hardened prepreg will show high glass transition temperature, typically in the range of ≥ 50°C to ≤ 150°C, preferably in the range of ≥ 80°C to ≤ 140°C, determined by dynamic mechanical thermal analysis according to DIN EN ISO 6721 at a heating rate of 20 K/min.

Also disclosed is a polyurethane obtained according to the process described hereinabove. The polyurethane, thus obtained, has good mechanical properties such as, but not limited to, tensile strength, elasticity modulus, flexural properties and elongation at break, thereby enabling it to be used for a wide range of applications.

Also disclosed is the use of the polyurethane as described hereinabove or as obtained according to the process described hereinabove, for making shaped articles. Shaped articles can be obtained using any technique known to the person skilled in the art, such as but not limited to moulding and extrusion techniques. Such techniques are known to the person skilled in the art and therefore the present invention is not limited by the choice and selection of such techniques.

Moreover, the shaped article can be of any shape, size, dimension and/or geometry and the present invention is not limited by the choice and selection of such shape, size, dimension and/or geometry. Depending on the application of the polyurethane, the shape, size, dimension and/or geometry may vary. Nevertheless, the shaped article is selected from the group consisting of an automotive component, construction component, medical component, sport component, electrical and electronic component and power plant generation component.

### Examples and comparative examples

### Compounds

| Polyol | OH value (mg KOH/g) | Functionality | Description |
|---|---|---|---|
| Polyol 1 | 110 | 2 | Neopentyl glycol-phthalic anhydride-based, obtained from Stepan Company |
| Polyol 2 | 34 | 2 | Amorphous linear Polyester Polyols, obtained from DIC Performance Resins |
| Polyol 3 | 74 | 2 | Linear polyetherol based on diethylene glycol with primary OH groups, obtained from BASF |
| Polyol 4 | 55 | 2 | Polypropylene glycol having molecular weight of 2000 g/mol, obtained from BASF |
| Polyol 5 | 30 | 2 | Solid, partially crystalline, saturated copolyester, obtained from Evonik |
| Polyol 6 | 55 | 2 | Solid, saturated, amorphous copolyester, obtained from Evonik |

| | | |
|---|---|---|
| PI 1 (also PI 1a) | Solvent free 4,4'-diphenylmethane diisocyanate (MDI) containing oligomers of high functionality and isomers and having NCO content of 31.5 wt.-%, obtained from BASF | |
| | | |
| PI 2 | 4,4'-diphenylmethane diisocyanate, obtained from BASF | |
| | | |
| Prepolymer | Isocyanate prepolymer having NCO content of 23.0 wt.-%, obtained from BASF | |
| | | |
| EP 1 | Liquid epoxy resin produced from bisphenol A and epichlorohydrin, obtained from Resolution Performance Products | |
| | | |
| Cat 1 | Mixture of LiCI and reaction product consisting of: | |
| | | - carbodiimide-modified 4,4'-diphenylmethane diisocyanate (MDI) having NCO content of 29.5 wt.-%, obtained from BASF, and |
| | | - a monofunctional polyethylene oxide having Mn of 500 g/mol, obtained from BASF |
| | | |
| Cat 2 | Non-inventive mixture of LiCI and urea prepolymer, obtainable by reaction of Jeffamin M600 from Huntsman and Polyisocyanate and also 0.70 eq. of LiCl, based on the number of urea bonds in the prepolymer, as described in WO10121898. | |
| | | |
| Cat 3 | | Potassium Acetate dissolved in propylene glycol |
| | | |
| Cat 4 | | Polycat SA 1/10 from Evonik |
| | | |
| Cat 5 | | Polycat 41 from Evonik |

### Standard methods

| | |
|---|---|
| OH value | DIN 53240 |
| NCO value | ASTM D 2572-70 (dibutylamine) |
| Shore hardness | DIN 5350 |
| 3-point bending test | DIN EN ISO 178 |
| Sagging | DIN EN ISO 178 |
| Elasticity modulus | DIN EN ISO 178 |
| Fracture | DIN EN ISO 178 |
| Tensile strength | DIN EN ISO 527 |
| Elongation at break | DIN EN ISO 527 |
| Heat deflection temperature | DIN EN ISO 75 using HDT-B-f, flat edge (HDT at 0.45 MPa) |

### Synthesis of prepreg binder composition

The polyols listed hereinabove were melted at 100°C. The isocyanate was added and the mixture was further stirred at 100°C for 2 h. In case of addition of PI 1a, the isocyanate PI 1 was added after the reaction between the other isocyanate and polyol. The resulting prepolymer was degassed in vacuum at 100°C for 0.5 h. To this, 9 wt.-% of EP 1 and 2 wt.-% of Cat 1 were firstly heated to 60°C and added. The prepreg binder composition was then cooled to room temperature and stored in vacuum sealed bags at room temperature. Table 1 below summarizes the components for the prepreg binder composition and properties of the resulting prepreg binder composition.

**Table 1: Inventive and comparative prepreg binder composition**

| | I.E. 1 | I.E. 2 | I.E. 3 | I.E. 4 | I.E. 5 | I.E. 6 | I.E. 7 | C.E. 1 | C.E.2 | C.E. 3 |
|---|---|---|---|---|---|---|---|---|---|---|
| Polyol 1 (gm) | 190.4 | 144.7 | - | 218.5 | - | - | - | - | - | - |
| Polyol 2 (gm) | - | - | 168.5 | - | - | 94.6 | - | - | - | - |
| Polyol 3 (gm) | - | - | - | - | - | - | - | 224.3 | - | - |
| Polyol 4 (gm) | - | - | - | - | - | - | - | - | 231.6 | |
| Polyol 5 (gm) | - | - | - | - | 244.4 | 171.4 | 171.4 | - | - | - |
| Polyol 6 (gm) | - | - | - | - | - | - | 100.0 | - | - | - |
| PI 1 (cook) (gm) | 242.3 | 278.1 | 259.4 | - | 200.0 | 234.4 | 228.9 | 215.7 | 210.1 | - |
| PI 1a (gm) | 67.3 | 77.2 | 72.1 | 65.1 | 55.6 | - | - | 59.9 | 58.4 | - |
| PI 2 (cook) (gm) | - | - | - | 216.4 | - | - | - | - | - | - |
| PI 3 | - | - | - | - | - | - | - | - | - | 100.0 |

| Isocyanate prepolymer | | | | | | | | | | |
|---|---|---|---|---|---|---|---|---|---|---|
| NCO content (%) | 15.5 | 19.2 | 19.7 | 14.0 | 14.7 | 12.8 | 12.4 | 14.6 | 14.5 | 22.9 |
| Viscosity at 40°C (Pa.s) | 2000 | 105 | 45 | 454 | 17 | 60 | 62 | 3 | 2 | 0.6 |
| Shear rate (1/s) | 0.034* | 0.68⁺ | 14.96⁺ | 0.136* | 0.850⁺ | 10.20⁺ | 10.20⁺ | 68.00* | 34.00⁺ | n.m. |
| Viscosity at 60°C (Pa.s) | 150 | 9 | 7 | 30 | 5 | 13 | 13 | 1 | 1 | n.m. |
| Shear rate (1/s) | 0.102* | 8.160* | 10.20* | 1.700* | 1.700* | 5.10* | 5.10* | 68.0* | 34.0* | n.m. |
| Viscosity at 40°C after 24 h (Pa.s) | 5000 | 97 | 45 | 442 | 17 | 56 | 63 | 3 | 2 | n.m. |
| Shear rate (1/s) | 0.068⁺ | 3.400⁺ | 14.96⁺ | 1.020⁺ | 0.850⁺ | 10.20⁺ | 10.20⁺ | 68.00⁺ | 68.00⁺ | n.m. |
| Viscosity at 60°C after 24 h (Pa.s) | 158 | 8 | 6 | 27 | 5 | 14 | 13 | 1 | 1 | n.m. |
| Shear rate (1/s) | 0.34* | 3.40* | 10.20* | 1.70* | 1.70* | 5.10* | 5.10* | 68.0* | 34.0* | n.m. |

| Prepreg binder composition | | | | | | | | | | |
|---|---|---|---|---|---|---|---|---|---|---|
| Mix-Viscosity at 40°C (Pa.s) | 687 | 59 | 59 | 201 | 8 | 37 | 38 | 3 | 2 | 0.655 |
| Mix-Viscosity at 60°C (Pa.s) | 79 | 7 | 6 | 20 | 4 | 10 | 10 | 1 | 1 | n.m. |
| Mix-Viscosity at 40°C after 24 h (Pa.s) | 972 | 6 | 21 | 139 | 9 | 9 | 28 | 2 | 2 | n.m. |
| Mix-Viscosity at 60°C after 24 h (Pa.s) | 60 | 5 | 4 | 14 | 3 | 8 | 8 | 1 | 1 | n.m. |
| Tackiness | tacky | tacky | tacky | tacky | Less tacky | tacky | tacky | tacky | tacky | liquid |

| | | | | | | | | | | |
|---|---|---|---|---|---|---|---|---|---|---|
| * Brookfield DV2TRV; ⁺ Brookfield DV2THB; n.m.=not measurable | | | | | | | | | | |

The table 1 shows that highly viscous prepolymers with viscosities > 15 Pa.s at 40°C tackiness and prepreg compositions with viscosities > 10 Pa.s can be produced.

When the prepreg binder composition was pressed at room temperature onto a surface (e.g. Teflon film) and removed, it showed slight adhesion onto the surface. This was evident by the noise accompanied during removal of the material from the surface. However, there was no continued sticking of the composition which implies that the composition was low-tack or has good tackiness. If the material does not stick, it can be removed from the film without problems. If the material was too tacky, it would form strings upon removal, and a part of the material would be left sticking on the surface.

### Effect of catalyst

To determine the effect of catalyst on the prepreg binder composition, isocyanate prepolymer from I.E. 7 in table 1 was selected. The epoxy compound and different catalysts were then mixed to this prepolymer, as shown in table 2, and cured at 60°C and 130°C. A long open time at 60°C for handling the prepreg binder composition in combination with a quick cure at 130°C for the final cure of the prepreg part was most favourable.

**Table 2: Prepreg binder composition with different catalyst**

| | I.E. 8 | C.E. 4 | C.E. 5 | I.E. 9 | C.E. 6 | C.E. 7 | C.E. 8 |
|---|---|---|---|---|---|---|---|
| Prepolymer (gm) | 45 | 45 | 45 | 45 | 45 | 45 | 45 |
| EP 1 (gm) | 4.5 | 0 | 4.5 | 4.5 | - | - | - |
| Cat 1 (gm) | 0.9 | 0.9 | 0 | - | - | - | - |
| Cat 2 (gm) | - | - | - | 0.9 | - | - | - |
| Cat 3 (gm) | - | - | - | - | 0.2 | - | - |
| Cat 4 (gm) | - | - | - | - | - | 0.9 | - |
| Cat 5 (gm) | - | - | - | - | - | - | 0.2 |

| Properties | | | | | | | |
|---|---|---|---|---|---|---|---|
| Curing at 130°C start (min) | 01:08 | no cure | no cure | 01:49 | 00:53 | 00:30 | 00:10 |
| Curing at 130°C all solid (min) | 02:15 | no cure | no cure | 03:20 | 02:35 | 01:04 | 00:40 |
| Open time at 60 °C (min) | 21:10 | nil | nil | 65:20 | 04:00 | 02:00 | 01:20 |

As evident above, the catalysts Cat 1 and Cat 2 give longer open times at 60°C and a quick cure at 130°C.

Mechanical testing of polyurethane from the prepreg binder composition 300 g of the prepreg binder composition (I.E. 1 to 7) from table 1 were heated to 60°C. A mold (20 cm × 30 cm, thickness 4 mm) was sprayed with Indrosil 2000 as external mold release agent and was preheated to 80°C. The prepreg binder composition was then poured into this mould and heated to 130°C for 30 min. The heating was switched off afterwards and the mold cooled to room temperature within 30 min. The mechanical testing plate was then removed and tested accordingly.

**Table 3: Mechanical properties of the polyurethane**

| | I.E. 1 | I.E. 2 | I.E. 3 | I.E. 4 | I.E. 5 | I.E. 6 | I.E. 7 |
|---|---|---|---|---|---|---|---|
| Shore hardness D | 87 | 88 | 87 | 87 | 77 | 81 | 80 |
| 3-point bending test with elasticity modulus (N/mm²) | 106.2 | 126.8 | 121.9 | 131.0 | 60.2 | 77.2 | 73.6 |
| Warpage (mm) | 11.3 | 6.0 | 5.8 | 6.1 | 12.0 | 12.3 | 12.3 |
| Elasticity modulus (N/mm²) | 3744 | 3571 | 3490 | 3667 | 1238 | 1604 | 1577 |
| Tensile strength (N/mm²) | 26.8 | 39.0 | 57.9 | 75.9 | 41.6 | 50.7 | 50.0 |
| Elongation at break (%) | 0.9 | 1.6 | 2.6 | 3.0 | 5.7 | 5.1 | 6.1 |
| Elasticity modulus (N/mm²) | 3901 | 3372 | 3302 | 3528 | 1192 | 1535 | 1436 |
| HDT (°C) | 102.6 | 115.7 | 123.7 | 105.5 | 127.2 | 75.2 | 75.5 |

Table 3 shows that depending on the NCO content and the amount of the prepreg binder components, highly viscous and tacky prepreg binder compositions with favourable curing times and long open times may be cured at 130°C to obtain polyurethane which covers a wide range of heat deflection temperatures with good mechanical properties.

## Claims

1. A process for preparing a prepreg binder composition comprising the steps of:
(A) preparing an isocyanate prepolymer by mixing
(P) at least one polyester polyol having an average functionality in the range of ≥ 1.9 to ≤ 2.5 and an OH value in the range of ≥ 10 mgKOH/g to ≤ 500 mgKOH/g, and
(PI) at least one polyisocyanate,
wherein the isocyanate prepolymer has an isocyanate content in the range of ≥ 8 wt.-% to ≤ 22 wt.-%,
and
(B) mixing at least one epoxy compound (EP), at least one catalyst (CA) with the isocyanate prepolymer of step (A) to obtain a prepreg binder composition having a viscosity in the range of ≥ 10 Pa.s to ≤ 1000 Pa.s, the viscosity being measured as described on page 4 of the description,
wherein the at least one catalyst (CA) is
(CA1) a mixture obtainable by introducing an alkali metal or alkaline earth metal salt into a compound R-NH-CO-XR', wherein X is selected from the group consisting of NH, O or S, or
(CA2) a mixture obtainable by introducing an alkali metal or alkaline earth metal salt into a compound having -CO-NH-CO- group.

2. The process according to claim 1, **characterized in that** the at least one polyisocyanate (PI) is an aromatic polyisocyanate (PI1) selected from the group consisting of 2,4- and 2,6-hex-ahydrotoluenediisocyanate, 1,2-, 1,3-, and 1,4-phenylene diisocyanates, triphenyl methane-4,4',4"-triisocyanate, naphthylene-1,5-diisocyanate, 2,4- and 2,6-toluene diisocyanate, 2,4'-, 4,4'- and 2,2-biphenyl diisocyanates, 2,2'-, 2,4'- and 4,4'-diphenylmethane diisocyanate, polyphenyl polymethylene polyisocyanates, 1,2-, 1,3- and 1,4-xylylene diisocyanates and m-tetramethylxylyene diisocyanate (TMXDI).

3. The process according to claim 1 or 2, **characterized in that** in step (B) the at least one epoxy compound (EP) comprises two, three or more epoxide groups per molecule.

4. The process according to one or more of claims 1 to 3, **characterized in that** in step (B) the alkali metal or alkaline earth metal salt is a salt of sodium, lithium, magnesium and potassium.

5. The process according to claim 4, **characterized in that** the alkali metal or alkaline earth metal salt is a lithium halide salt (LH).

6. The process according to one or more of claims 1 to 5, **characterized in that** the at least one catalyst (CA) is (CA1) a mixture obtainable by introducing an alkali metal or alkaline earth metal salt into a compound R-NH-CO-XR', wherein X is selected from the group consisting of NH, O or S.

7. The process according to claim 6, wherein X is NH or O.

8. The process according to one or more of claims 1 to 7, **characterized in that** in step (B) a temperature ≤ 80°C is provided.

9. A prepreg binder composition obtained by the process according to one or more of claims 1 to 8, **characterized in that** the prepreg binder composition has a viscosity in the range of ≥ 10 Pa.s to ≤ 1000 Pa.s., the viscosity being measured as described on page 4 of the description.

10. A process for preparing a prepreg, comprising the steps of:
(A') preparing a prepreg binder composition according to claim 9 or as obtained by the process according to one or more of claims 1 to 8, and
(B') impregnating at least one fibrous support (FS) with the prepreg binder composition obtained in step (A') to obtain a prepreg.

11. Prepreg obtained by the process according to claim 10.

12. A process for preparing a polyurethane, comprising the step of:
(S1) heating a prepreg according to claim 11 or as obtained according to claim 10 preferably at a temperature > 80°C to obtain a polyurethane.

## Patentansprüche

1. Verfahren zur Herstellung einer Prepregbindemittelzusammensetzung, umfassend die Schritte:
(A) Herstellen eines Isocyanat-Präpolymers durch Mischen von
(P) wenigstens einem Polyesterpolyol mit einer mittleren Funktionalität in dem Bereich von ≥ 1,9 bis ≤ 2,5 und einem OH-Wert in dem Bereich von ≥ 10 mgKOH/g bis ≤ 500 mgKOH/g, und
(PI) wenigstens einem Polyisocyanat,
wobei das Isocyanat-Präpolymer einen Isocyanatgehalt in dem Bereich von ≥ 8 Gew.-% bis ≤ 22 Gew.-% aufweist,
und
(B) Mischen wenigstens einer Epoxyverbindung (EP), wenigstens eines Katalysators (CA) mit dem Isocyanat-Präpolymer von Schritt (A), um eine Prepregbindemittelzusammensetzung mit einer Viskosität in dem Bereich von ≥ 10 Pa.s bis ≤ 1000 Pa.s zu erhalten, wobei die Viskosität wie auf Seite 4 der Beschreibung beschrieben gemessen wird,
wobei der wenigstens eine Katalysator (CA) ist:
(CA1) ein Gemisch, erhältlich durch Einführen eines Alkalimetall- oder Erdalkalimetallsalzes in eine Verbindung R-NH-CO-XR', wobei X ausgewählt ist aus der Gruppe bestehend aus NH, O und S, oder
(CA2) ein Gemisch, erhältlich durch Einführen eines Alkalimetall- oder Erdalkalimetallsalzes in eine Verbindung mit einer -CO-NH-CO-Gruppe.

2. Verfahren gemäß Anspruch 1, **dadurch gekennzeichnet, dass** das wenigstens eine Polyisocyanat (PI) ein aromatisches Polyisocyanat (PI1) ist, ausgewählt aus der Gruppe bestehend aus 2,4- und 2,6-Hexahydrotoluoldiisocyanat, 1,2-, 1,3- und 1,4-Phenylendiisocyanaten, Triphenylmethan-4,4',4"-triisocyanat, Naphthylen-1,5-diisocyanat, 2,4- und 2,6-Toluoldiisocyanat, 2,4'-, 4,4'- und 2,2-Biphenyldiisocyanaten, 2,2'-, 2,4'- und 4,4'-Diphenylmethandiisocyanat, Polyphenylpolymethylenpolyisocyanaten, 1,2-, 1,3- und 1,4-Xylylendiisocyanaten und m-Tetramethylxylylendiisocyanat (TMXDI).

3. Verfahren gemäß Anspruch 1 oder 2, **dadurch gekennzeichnet, dass** bei Schritt (B) die wenigstens eine Epoxyverbindung (EP) zwei, drei oder mehr Epoxidgruppen pro Molekül umfasst.

4. Verfahren gemäß einem oder mehreren der Ansprüche 1 bis 3, **dadurch gekennzeichnet, dass** bei Schritt (B) das Alkalimetall- oder Erdalkalimetallsalz ein Salz von Natrium, Lithium, Magnesium oder Kalium ist.

5. Verfahren gemäß Anspruch 4, **dadurch gekennzeichnet, dass** das Alkalimetall- oder Erdalkalimetallsalz ein Lithiumhalogenidsalz (LH) ist.

6. Verfahren gemäß einem oder mehreren der Ansprüche 1 bis 5, **dadurch gekennzeichnet, dass** der wenigstens eine Katalysator (CA) (CA1) ein Gemisch, erhältlich durch Einführen eines Alkalimetall- oder Erdalkalimetallsalzes in eine Verbindung R-NH-CO-XR', wobei X ausgewählt ist aus der Gruppe bestehend aus NH, O und S, ist.

7. Verfahren gemäß Anspruch 6, wobei X NH oder O ist.

8. Verfahren gemäß einem oder mehreren der Ansprüche 1 bis 7, **dadurch gekennzeichnet, dass** bei Schritt (B) eine Temperatur von ≤ 80 °C bereitgestellt wird.

9. Prepregbindemittelzusammensetzung, erhalten durch das Verfahren gemäß einem oder mehreren der Ansprüche 1 bis 8, **dadurch gekennzeichnet, dass** die Prepregbindemittelzusammensetzung eine Viskosität in dem Bereich von ≥ 10 Pa.s bis ≤ 1000 Pa.s aufweist, wobei die Viskosität wie auf Seite 4 der Beschreibung beschrieben gemessen wird.

10. Verfahren zur Herstellung eines Prepregs, umfassend die Schritte:
(A') Herstellen einer Prepregbindemittelzusammensetzung gemäß Anspruch 9 oder erhalten durch das Verfahren gemäß einem oder mehreren der Ansprüche 1 bis 8, und
(B') Imprägnieren wenigstens eines faserigen Trägers (FS) mit der bei Schritt (A') erhaltenen Prepregbindemittelzusammensetzung, um ein Prepreg zu erhalten.

11. Prepreg, erhalten durch das Verfahren gemäß Anspruch 10.

12. Verfahren zur Herstellung eines Polyurethans, umfassend den Schritt:
(S1) Erhitzen eines Prepregs gemäß Anspruch 11 oder erhalten gemäß Anspruch 10, vorzugsweise bei einer Temperatur von > 80 °C, um ein Polyurethan zu erhalten.

## Revendications

1. Procédé pour la préparation d'une composition de liant de préimprégné comprenant les étapes de :
(A) préparation d'un prépolymère d'isocyanate en mélangeant
(P) au moins un polyester polyol ayant une fonctionnalité moyenne dans la plage de ≥ 1,9 à ≤ 2,5 et un indice d'OH dans la plage de ≥ 10 mg de KOH/g à ≤ 500 mg de KOH/g, et
(PI) au moins un polyisocyanate,
le prépolymère d'isocyanate ayant une teneur en isocyanate dans la plage de ≥ 8 % en poids à ≤ 22 % en poids, et
(B) mélange d'au moins un composé de divers époxy (EP), d'au moins un catalyseur (CA) avec le prépolymère d'isocyanate de l'étape (A) pour obtenir une composition de liant de préimprégné ayant une viscosité dans la plage de ≥ 10 Pa.s à ≤ 1 000 mPa.s, la viscosité étant mesurée comme décrit en page 4 de la description,
l'au moins un catalyseur (CA) étant
(CA1) un mélange pouvant être obtenu en introduisant un sel de métal alcalin ou de métal alcalino-terreux dans un composé R-NH-CO-XR', X étant choisi dans le groupe constitué par NH, O ou S, ou
(CA2) un mélange pouvant être obtenu par introduction d'un sel de métal alcalin ou de métal alcalino-terreux dans un composé ayant un groupe - CO-NH-CO-.

2. Procédé selon la revendication 1, **caractérisé en ce que** l'au moins un polyisocyanate (PI) est un polyisocyanate aromatique (PI1) choisi dans le groupe constitué par le 2,4-diisocyanate d'hexahydrotoluène et le 2,6-diisocyanate d'hexahydrotoluène, les 1,2-, 1-3 et 1,4-diisocyanates de phénylène, le 4,4',4"-triisocyanate de triphénylméthane, le 1,5-diisocyanate de naphtylène, le 2,4- et le 2,6-diisocyanate de toluène, les 2,4'-, 4,4'- et 2,2-diisocyanates de biphényle, les 2,2'-, 2,4'- et 4,4'-diisocyanates de diphénylméthane, les polyisocyanates de polyméthylène polyphényle, les 1,2-, 1-3 et 1,4-diisocyanates de xylylène et le diisocyanate de m-tétraméthylxylène (TMXDI).

3. Procédé selon la revendication 1 ou 2, **caractérisé en ce que** dans l'étape (B) l'au moins un composé de type époxy (EP) comprend deux, trois groupes époxyde ou plus par molécule.

4. Procédé selon l'une ou plusieurs des revendications 1 à 3, **caractérisé en ce que** dans l'étape (B) le sel de métal alcalin ou de métal alcalino-terreux est un sel de sodium, de lithium, de magnésium et de potassium.

5. Procédé selon la revendication 4, **caractérisé en ce que** le sel de métal alcalin ou de métal alcalino-terreux est un sel d'halogénure de lithium (LH).

6. Procédé selon l'une ou plusieurs des revendications 1 à 5, **caractérisé en ce que** l'au moins un catalyseur (CA) est (CA1) un mélange pouvant être obtenu en introduisant un sel de métal alcalin ou de métal alcalino-terreux dans un composé R-NH-CO-XR', X étant choisi dans le groupe constitué par NH, O ou S.

7. Procédé selon la revendication 6, X étant NH ou O.

8. Procédé selon l'une ou plusieurs des revendications 1 à 7, **caractérisé en ce que** dans l'étape (B) une température ≤ 80 °C est fournie.

9. Composition de liant préimprégné obtenue par le procédé selon l'une ou plusieurs des revendications 1 à 8, **caractérisée en ce que** la composition de liant de préimprégné possède une une viscosité dans la plage de ≥ 10 Pa.s à ≤ 1 000 mPa.s, la viscosité étant mesurée comme décrit en page 4 de la description.

10. Procédé pour la préparation d'un préimprégné, comprenant les étapes de :
(A') préparation d'une composition de liant de préimprégné selon la revendication 9 ou telle qu'obtenue par le procédé selon l'une ou plusieurs des revendications 1 à 8, et
(B') imprégnation d'au moins un support fibreux (FS) avec la composition de liant de préimprégné obtenue dans l'étape (A') pour obtenir un préimprégné.

11. Préimprégné obtenu par le procédé selon la revendication 10.

12. Procédé pour la préparation d'un polyuréthane, comprenant l'étape de :
(S1) chauffage d'un préimprégné selon la revendication 11 ou tel qu'obtenu selon la revendication 10 préférablement à une température > 80 °C pour obtenir un polyuréthane.
